# EUROPÄISCHE PATENTANMELDUNG

(11) **EP 1 716 749 A1**
(43) Veröffentlichungstag der Anmeldung: **02.11.2006**
(21) Anmeldenummer: 06008943.0
(22) Anmeldetag: 28.04.2006
(51) Int. Cl.: A01J 5/017, A01J 5/00

(54) **Haltevorrichtung für wenigstens ein Melkzeug**

(30) Priorität: 29.04.2005 DE 102005020324
(71) Anmelder: WestfaliaSurge GmbH, 59199 Bönen (DE)
(72) Erfinder: Ahrens, Matthias, 59510 Lippetal (DE)
(74) Vertreter: Neumann, Ditmar

(57) **Zusammenfassung**

Zur Bewegung eines Melkzeugs in einer Melkvorrichtung von einem Melkplatz eines Melkbereichs über einen Gangbereich hinweg zu einem Melkplatz in einem gegenüberliegenden Melkbereich wird eine Haltevorrichtung vorgeschlagen, die wenigstens ein mehrgliedriges Gelenkgetriebe, vorzugsweise ein viergliedriges Gelenkgetriebe aufweist.

## Beschreibung

Der Gegenstand der Erfindung bezieht sich auf eine Haltevorrichtung für wenigstens ein Melkzeug sowie auf eine Melkvorrichtung mit zwei Melkbereichen und einem zwischen den Melkbereichen angeordneten Gang.

Zum Melken von Tieren sind unterschiedliche Ausgestaltungen von Melkvorrichtungen bekannt. Bei stationären. Melkvorrichtungen werden die Tiere in dem Melkbereich an einzelnen Melkplätzen positioniert. Das Anbringen der Melkzeuge kann manuell bis hin zur vollautomatischen Ansätzen der Melkzeuge erfolgen. In Abhängigkeit von der Positionierung der Tiere bzw. der Anordnung der Melkplätze spricht man von Side by Side oder von Fischgräten-Melkeinrichtungen.

Es sind auch Melkvorrichtungen bekannt, die zwei Melkbereiche aufweisen, wobei zwischen den Melkbereichen ein Gang ausgebildet. Ein solcher Gang wird auch als Melkergrube bezeichnet. Von dieser Grube aus kann ein Melker die Melkbecher an die Zitzen der Tiere ansetzen. In doppelt bestückten Melkvorrichtungen, dass heißt bei Melkvorrichtungen, in denen für die beiden Bereiche Melkzeuge vorhanden sind, kommt es vor, dass die Tiere in den beiden Melkbereichen gleichzeitig mit dem Melken fertig sind und nun gleichzeitig hinaus gelassen werden müssten. Zugleich sollen dann auch die nachfolgenden Kühe in beiden Melkbereichen gleichzeitig in die Melkbereiche kommen, angerüstet und gemolken werden. Diese Vorgehensweise ist für eine Bedienperson, schwierig zu verwirklichen.

Es sind daher Melkvorrichtungen entwickelt worden, in denen ein Melkequipment, dass heißt das Melkzeug, das Melksteuergerät, der Pulsator etc. nur einmal pro Doppelplatz in der Melkvorrichtung über dem Gang angebracht sind. Bei einer solchen Ausgestaltung einer Melkvorrichtung besteht die Möglichkeit das Melkequipment nach Beendigung des Melkvorgangs von der einen Seite des Gangs auf die andere Seite des Gangs zu verschieben. Hierdurch werden nur halb so viele Melkgeräte, wie Melkplätze vorhanden sind, benötigt. In Abhängigkeit davon, wie die Melkgeräte von der einen Seite des Ganges zur anderen Seite des Ganges verschoben bzw. bewegt werden, wird zwischen einer Swing Over Melkvorrichtung oder einer Track-Over-Melkvorrichtung unterschieden. Sowohl bei einer Swing-Over-Melkvorrichtung als auch bei einer Track-Over-Melkvorrichtung werden die Melkleitungen überkopf oder seitlich über Kopfhöhe des Melkers verlegt. Bei einer Swing-Over-Vorrichtung ist zum Haltern eines jeden Melkzeugs eine Vorrichtung vorgesehen, die einen verschwenkbaren Arm aufweist, wobei der Arm um eine im wesentlichen vertikale Achse verschwenkbar ist. Durch das Verschwenken des Armes kann das Melkequipment nach Beendigung eines Melkvorgangs von einem Melkbereich in den anderen Melkbereich verschwenkt werden.

Die Track-Over-Melkvorrichtung weist eine Haltevorrichtung für das Melkzeug auf, wobei die Haltevorrichtung im wesentlichen quer zur Längsrichtung des Gangbereichs bzw. der Melkgrube zwischen zwei Melkbereichen verschiebbar ist. Die Verschiebung erfolgt in einem entsprechenden Schienensystem.

Problematisch bei einer Track-Over-Melkvorrichtung und bei einer Swing-Over-Melkvorrichtung ist, dass diese an die Breite des Ganges sowie an das Rastermaß der Melkstandgerüste in den Melkbereichen angepasst werden müssen.

Hiervon ausgehend liegt der vorliegenden Erfindung die Aufgabe zugrunde, eine Haltevorrichtung für wenigstens ein Melkzeug anzugeben, durch welche eine günstigere Anpassung an die räumlichen Verhältnisse erreicht wird.

Diese Aufgabe wird erfindungsgemäß durch eine Haltevorrichtung für wenigstens ein Melkzeug mit den Merkmalen des Anspruchs 1 erreicht. Vorteilhafte Weiterbildungen und Ausgestaltungen der Haltevorrichtung sind Gegenstand der jeweiligen abhängigen Ansprüche.

Die erfindungsgemäße Haltevorrichtung für wenigstens ein Melkzeug zeichnet sich dadurch aus, dass diese wenigstens ein mehrgliedriges Gelenkgetriebe auf weist. Durch eine solche Ausgestaltung der Haltevorrichtung wird eine verbesserte Anpassung an die räumlichen Gegebenheiten insbesondere an das Rastermaß der Melkgerüste der Melkbereiche erreicht. Ein weiterer Vorteil der erfindungsgemäßen Haltevorrichtung ist, dass diese relativ wartungsarm ausgebildet sein kann, wenn die Glieder des mehrgliedrigen Gelenkgetriebes lediglich durch Drehgelenke miteinander verbunden sind. Bei der Verwendung wartungsfreier Drehgelenke kann die Wartung auf ein Minimum reduziert werden.

In Abhängigkeit von der Ausgestaltung des mehrgliedrigen Gelenkgetriebes können auch unterschiedliche Bahnen eines Abnahmepunktes des Melkzeugs realisiert werden.

Die erfindungsgemäße Haltevorrichtung eröffnet auch die Möglichkeit, anstelle der bei einer Swing-Over-Melkvorrichtung oder bei einer Track-Over-Melkvorrichtung verwendeten Haltevorrichtungen die erfindungsgemäße Haltevorrichtung für das Melkzeug einzusetzen.

Die Variabilität und die Anpassungsfähigkeit der Haltevorrichtung hat auch große wirtschaftliche Vorteile, da eine individuelle Anfertigung solcher Haltevorrichtungen, wie dies bei Haltevorrichtungen, die in Swing-Over-Melkvorrichtungen oder Track-Over-Melkvorrichtungen verwendet werden, nicht zwingend notwendig ist.

Insbesondere wird vorgeschlagen, dass das wenigstens eine Gelenkgetriebe als ein viergliedriges Gelenkgetriebe ausgebildet ist. Ein solches viergliedriges Gelenkgetriebe weist bei einem relativ geringen konstruktiven Aufwand eine hohe Effizienz auf.

Das viergliedrige Gelenkgetriebe kann als ein nicht umlauffähiges Getriebe ausgebildet sein. Eine solche Ausbildung des Getriebes hat den Vorteil, dass bei einer Anordnung mehrere Haltevorrichtungen es zu keiner Kollision der Haltevorrichtungen kommt. Bevorzugt ist jedoch eine Ausgestaltung, bei dem das Gelenkgetriebe umlauffähig ist. Bei einem viergliedrigen Gelenkgetriebe kann das Gelenkgetriebe umlauffähig dadurch ausgebildet werden, dass die Summe aus den Längen des kürzesten und des längsten Gliedes kleiner ist als die Summe der Längen der beiden anderen Glieder. In einem solchen Fall ist die Grashof-Bedingung erfiillt, so dass das Gelenkgetriebe umlauffähig ist und die Haltevorrichtung einen wesentlich größeren Bereich überstreichen kann, wenn dieses bewegt wird.

Um die Variabilität der Haltevorrichtung noch weiter zu verbessern und um sicherzustellen, dass der Abnahmepunkt nahe genug am Melkbereich bzw. am Melkplatz ist, so dass keine oder nur sehr geringe Kräfte auf das Melkzeug beim Melken ausgeübt werden, wird vorgeschlagen, dass das Glied, an dem das Melkzeug gehaltert wird, längenveränderlich, insbesondere teleskopartig ausgebildet ist.

Bevorzugt ist dabei eine Ausgestaltung des teleskopartigen Gliedes, bei der das Glied eine Kolben-Zylinder-Einheit aufweist, wobei der Kolben der Kolben-Zylinder-Einheit mit einer Stange verbunden ist, an der das Melkzeug gehaltert wird. Insbesondere wird vorgeschlagen, dass die Kolben-Zylinder-Einheit eine doppelseitig wirkende Einheit ist, so dass der Kraftaufwand für eine Bedienperson zum Teleskopieren des Gliedes bzw. zum Zusammenschieben des Gliedes relativ gering ist.

Statt einer Kolben-Zylinder-Einheit besteht auch die Möglichkeit, dass das Glied wenigstens ein rohrförmiges Element aufweist, in welches ein zweites Element einschiebbar und herausführbar ist.

Zu einer noch weiteren Verbesserung der Flexibilität der Haltevorrichtung wird vorgeschlagen, dass das wenigstens eine Gelenkgetriebe zumindest verschwenkbar, vorzugsweise verdrehbar mit einer Struktur verbunden ist. Bei der Struktur kann es sich beispielsweise um ein Gerüst handeln, welches über dem Gang zwischen zwei Melkbereichen angeordnet ist. Bevorzugt ist dabei eine Ausgestaltung, bei der ein Träger verschwenkbar um eine erste vertikale Achse mit der Struktur verbunden ist, wobei das Gelenkgetriebe um eine zweite im wesentlichen vertikal verlaufende Achse mit dem Träger verbunden ist.

Gemäß einer noch weiteren vorteilhaften Ausgestaltung der Haltevorrichtung wird vorgeschlagen, dass wenigstens eine Führungseinrichtung vorgesehen ist, die zur Führung wenigstens eines Gelenkgetriebes geeignet ist. Insbesondere wird die Führungseinrichtung durch wenigstens eine Führungsschiene gebildet. Hierdurch kann die Reichweite der Haltevorrichtung noch weiter erhöht werden. Alternativ besteht die Möglichkeit, bestehende Track-Over System mit der erfindungsgemä-ßen Haltevorrichtung auszugestalten.

Der vorliegenden Erfindung liegt des weiteren die Aufgabe zugrunde, die bekannte Melkvorrichtung so weiterzubilden, dass die Durchführung von Melkvorgängen erleichtert wird. Insbesondere soll das Ansetzen von Melkbecher vereinfacht werden.

Diese Aufgabe wird erfindungsgemäß durch eine Melkvorrichtung mit den Merkmalen des Anspruchs 10 erreicht. Vorteilhafte Weiterbildungen und Ausgestaltungen der erfindungsgemäßen Melkvorrichtung sind Gegenstand der abhängigen Ansprüche.

Die erfindungsgemäße Melkvorrichtung weist zwei Melkbereiche auf, zwischen denen ein Gangbereich vorgesehen ist. Innerhalb des Gangbereichs ist wenigstens eine Haltevorrichtung für wenigstens ein Melkzeug vorgesehen. Die erfindungsgemäße Melkvorrichtung zeichnet sich dadurch aus, dass die Haltevorrichtung wenigstens ein mehrgliedriges Gelenkgetriebe aufweist.

Durch die erfindungsgemäße Melkvorrichtung wird die Durchführung von Melkvorgängen vereinfacht, da nunmehr durch das mehrgliedrige Gelenkgetriebe die Reichweite erhöht werden kann, so dass sowohl das Ansetzen von Melkbechern vereinacht, als auch während eines Melkvorgangs keine oder nur geringe Kräfte auf das Melkzeug durch die Haltevorrichtung ausgeübt werden.

Die Haltevorrichtung der Melkvorrichtung ist vorzugsweise durch wenigstens ein viergliedriges Gelenkgetriebe gebildet. Es besteht die Möglichkeit, die Haltevorrichtung so auszubilden, dass diese beispielsweise zwei viergliedrige Gelenkgetriebe aufweist, wodurch der Verschwenkbereich des Aufnahmepunktes für ein Melkzeug noch weiter variiert werden kann. Bevorzugt ist eine Ausgestaltung, bei der das Gelenkgetriebe der Haltevorrichtung umlauffähig ist.

Gemäß einer noch weiteren vorteilhaften Ausgestaltung der Melkvorrichtung wird vorgeschlagen, dass oberhalb des Ganges wenigstens eine Struktur angeordnet ist, mit der die wenigstens eine Haltevorrichtung, insbesondere wenigstens ein Gelenkgetriebe, zumindest verschwenkbar, vorzugsweise verdrehbar verbunden ist.

Diese Ausgestaltung ermöglicht ein Verschwenken der Haltevorrichtung, ohne dass ein umlauffähiges Gelenkgetriebe zwingend notwendig ist.

Gemäß einer noch weiteren vorteilhaften Ausgestaltung der Melkvorrichtung wird vorgeschlagen, dass oberhalb des Gangbereichs wenigstens eine Führungseinrichtung vorgesehen ist, die mit einer Haltevorrichtung verbunden ist. Die Führungseinrichtung ist vorzugsweise durch wenigstens eine Führungsschiene gebildet.

Weitere Einzelheiten und Vorteile der erfindungsgemäßen Haltevorrichtung und der erfindungsgemäßen Melkvorrichtung werden anhand der in der Zeichnung dargestellten Ausführungsbeispiele erläutert, ohne dass der Gegenstand der Erfindung auf diese konkreten Ausführungsbeispiele beschränkt wird.

### Es zeigen:

- Fig. 1: schematisch eine Haltevorrichtung für ein Melkzeug,
- Fig. 2: schematisch in einer Vorderansicht eine Melkvorrichtung,
- Fig. 3: in einer Draufsicht einen Gangbereich eine Melkvorrichtung mit einer Haltevorrichtung für ein Melkzeug und
- Fig. 4: in einer Draufsicht eine Haltevorrichtung für ein Melkzeug einer Melkvorrichtung.

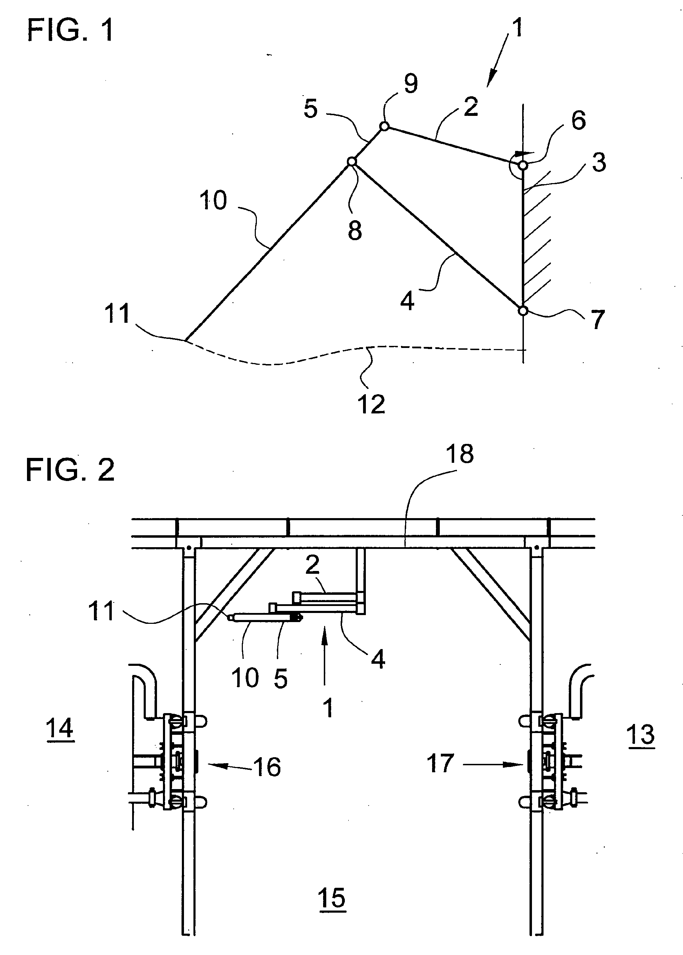

In der Figur 1 ist schematisch eine Haltevorrichtung 1 für ein Melkzeug dargestellt. Die Haltevorrichtung ist durch ein mehrgliedriges Gelenkgetriebe gebildet. Bei dem Gelenkgetriebe nach Figur 1 handelt es sich um ein viergliedriges Gelenkgetriebe. Es ist gebildet durch die Glieder 2, 3, 4 und 5. Die Glieder 2, 3 sind über ein Gelenk 6 miteinander verbunden. Die Glieder 3, 4 sind über ein Gelenk 7 miteinander verbunden. Ein Gelenk 8 stellt eine Verbindung zwischen den Gliedern 4 und 5, während das Gelenk 9 eine Verbindung zwischen den Gliedern 5 und 2. Das Glied 3 des viergliedrigen Gelenkgetriebes ist beispielsweise mit einer Struktur, welche nicht dargestellt ist, verbunden.

Das Gelenkgetriebe ist vorzugsweise umlauffähig. Dies bedeutet, dass das Gelenkgetriebe beispielsweise um das Gelenk 6 eine Drehung über mehr als 360° vollziehen kann. Eine Umlauffähigkeit des Gelenkgetriebes ist gegeben, wenn die Summe der Längen des kürzesten Gliedes und des längsten Gliedes kleiner ist als die Summe der Längen der beiden anderen Glieder. Im vorliegenden Fall wäre eine Umlauffähigkeit des Gelenkgetriebes gegeben, wenn die Summe der Längen des Gliedes 4 und des Gliedes 5 kleiner wäre als die Summe der Längen der Glieder 2 und 3.

Aus der Darstellung in der Figur 1 ist ersichtlich, dass das Glied 5 eine Verlängerung 10 aufweist. In dem dargestellten Ausführungsbeispiel handelt es sich um eine einseitige Verlängerung des Gliedes 5. Es ist nicht zwingend notwendig, dass die Verlängerung 10 im wesentlichen koaxial zur Längsachse des Gliedes 5 verläuft. Es besteht auch die Möglichkeit, dass die Verlängerung 10 die Längsachse des Gliedes 5 schneidet.

Statt einer Verlängerung des Gliedes 5 besteht auch die Möglichkeit eine Verlängerung des Gliedes 2 oder 4 vorzusehen. Welches der Glieder verlängert wird, ist abhängig von den Einbaugegebenheiten und/oder vom Verlauf einer Bewegungsbahn, die gewünscht ist. An der Verlängerung 10 insbesondere am Abnahmepunkt 11 ist ein nicht dargestelltes Melkzeug gehaltert, Die Bewegung des Abnahmepunktes 11 ist durch die Bewegungsbahn 12, welche gestrichelt in der Figur 1 eingezeichnet ist, dargestellt. Wird das Gelenkgetriebe um das Gelenk 6 in Pfeilrichtung verschwenkt, so bewegt sich der Abnahmepunkt 11 auf der Bewegungsbahn 12. Bei einer Verdrehung um das Gelenk 6 bewegt sich das Gelenk 9 auf einer Kreisbahn. Der Radius des entsprechenden Kreises entspricht dem Abstand zwischen dem Gelenk 6 und dem Gelenk 9, was im wesentlichen der Länge des Gliedes 2 entspricht. Das Gelenk 8 bewegt sich gleichfalls auf einer Kreisbahn um einen Mittelpunkt, der durch das Gelenk 7 gebildet ist. Der Radius dieses Kreises entspricht dem Abstand zwischen den Gelenken 7 und 8, wobei dieser Abstand im wesentlichen der Länge des Gliedes 4 entspricht.

Das Glied 5 bzw. die Verlängerung 10 des Gliedes 5 ist vorzugsweise längenveränderlich ausgebildet. Bevorzugt ist dabei eine Ausgestaltung, bei der die längenveränderung durch einen teleskopartigen Aufbau der Verlängerung 10 oder des Gliedes 5 erreicht wird, wobei der Abstand der Gelenke 8, 9 konstant gehalten wird.

Die Figur 2 zeigt schematisch und in einer Vorderansicht eine Melkvorrichtung. Die Melkvorrichtung weist zwei Melkbereiche 13, 14 auf. In den Melkbereichen 13, 14 können die zu melkenden Tiere entsprechend positioniert werden. Zwischen den Melkbereichen 13, 14 ist ein Gangbereich 15 vorgesehen. Der Gangbereich 15 ist gegenüber den Melkbereichen 13, 14 durch entsprechende Gerüste 16, 17 abgegrenzt. Oberhalb des Gangbereichs 15 ist eine Tragstruktur 18 vorgesehen, an der Haltevorrichtungen 1 befestigt sind.

Bei der in der Figur 2 dargestellten Haltevorrichtung handelt es sich um eine Haltevorrichtung, die entsprechend der Haltevorrichtung nach Fig. 1 ausgebildet ist. Nicht dargestellt ist ein Melkzeug, welches durch die Haltevorrichtung 1 gehalten wird. Fig. 2 zeigt die Haltevorrichtung in einer Stellung, in der an einem Melkplatz im Melkbereich 14 ein Tier gemolken werden kann. Durch Verschwenken der Haltevorrichtung kann der Abnahmepunkt 11 in Richtung des Melkbereichs 13 verlagert werden, so dass ein Melkzeug, welches von der Haltevorrichtung gehalten wird, für einen Melkplatz im Melkbereich 13 zur Verfügung gestellt wird.

Längs des Gangsbereich 15 sind mehrere Haltevorrichtungen angeordnet. Die Anzahl der Haltevorrichtungen und der Melkzeuge entspricht im wesentlichen der Hälfte der Gesamtzahl der Melkplätze der Melkvorrichtung.

Die zu einem nicht dargestellten Melkzeug führenden Leitungen werden auch von der Haltevorrichtung gehalten und münden in entsprechende Sammelleitungen, die auch von der Tragstruktur 18 getragen werden.

Die Haltevorrichtung 1 und die Tragstruktur sind so ausgebildet, dass ein Melker sich unterhalb der Haltevorrichtung 1 frei bewegen kann.

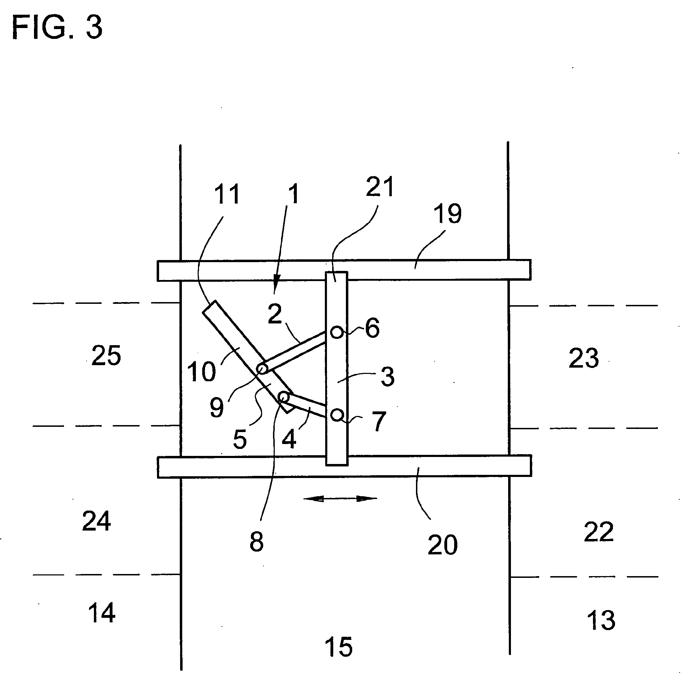

Eine weitere Ausführungsform einer Melkvorrichtung mit zwei Melkbereichen 13, 14 und einem zwischen den Melkbereichen 13, 14 angeordneten Gangbereich 15 ist in der Figur 3 dargestellt. Schematisch sind die Melkplätze in den Melkbereichen 13, 14 durch die gestrichelten Linien dargestellt. Die Melkbereiche 13, 14 weisen sich gegenüberliegende Melkplätze 22, 24; 23, 25 auf. Für jeweils zwei sich gegenüberliegenden Melkplätze 23, 25 der Melkbereiche 13, 14 ist eine Haltevorrichtung 1 für ein Melkzeug vorgesehen.

Die Haltevorrichtung ist durch ein viergliedriges Gelenkgetriebe gebildet. Das Gelenkgetriebe umfasst die Gleider 2, 3, 4 und 5, die gelenkig miteinander über die Gelenke 6, 7, 8 und 9 verbuden sind. Das Glied 5 weist eine Verlängerung 10 auf, an deren freien Ende ein Abnahmepunkt 11 bildet, an dem das Melkzeug gehaltert wird. Das Glied 3 ist ein Teil eines Schlittens 21, der auf Führungsschienen 19, 20 quer zur Längsrichtung des Gangbereichs verfahrbar ist. Bei einer solchen Ausgestaltung der Melkvorrichtung besteht die Möglichkeit, eine standardisierte Haltevorrichtung zu verwenden und durch die Kombination Führungsschiene/Schlitten die Melkvorrichtung an unterschiedliche Breiten eines Gangbereichs anzupassen.

Es besteht auch die Möglichkeit, die erfindungsgemäße Haltevorrichtung 1 mit den bekannten Track-Over-Melkvorrichtungen zu kombinieren, so dass die Bewegungsbahn des Abnahmepunktes 11 in einer großen Variationsvielfalt verändert werden kann.

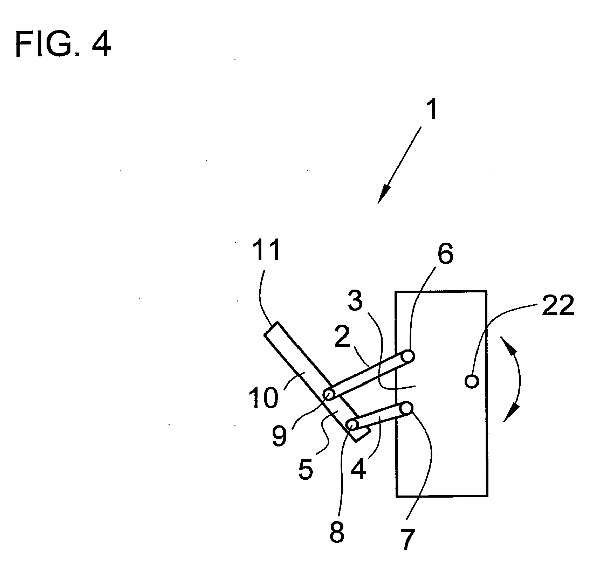

Eine Variation der Bewegungsbahn kann auch dadurch erreicht werden, dass das Glied 3 selbst um eine Achse verdrehbar ist. Hierzu ist die Haltevorrichtung entsprechend über das Glied 3 mit einer Tragstruktur verbunden. Eine solche Ausfiihrungsform einer Haltevorrichtung ist in der Figur 4 dargestellt.

Die Haltevorrichtung weist ein mehrgliedriges Gelenkgetriebe auf. In dem konkreten Ausführungsbeispiel handelt es sich um ein viergliedriges Gelenkgetriebe mit den Gliedern 2, 3, 4, 5. Das Glied 5 weist eine Verlängerung 10 mit einem Abnahmepunkt 11 auf.

In dem dargestellten Ausführungsbeispiel ist das Glied 3 um eine Achse 22 zumindest verschwenkbar. Durch eine entsprechende gelenkige Verbindung des Gliedes 3 mit einer Struktur ist die Haltevorrichtung 1 verschwenkbar, insbesondere verdrehbar um die Achse 22. Die in der Figur 4 dargestellte Haltevorrichtung eignet sich besonders zu Nachrüstung bereits vorhandener Swing-Over-Melkvorrichtungen.

Es besteht auch die Möglichkeit, die in der Figur 4 dargestellte Haltevorrichtung mit einem Schlitten 21 nach Figur 3 zu kombinieren, so dass ein noch größerer Arbeitsbereich abgedeckt werden kann.

Die erfindungsgemäße Haltevorrichtung sowie die erfindungsgemäße Melkvorrichtung eignet sich zum Melken von milchabgebenden Tieren wie z. B. Kühen. Stuten, Dromedaren, Yaks, Eseln, Ziegen und Schafen.

### BEZUGSZEICHENLISTE

- 1: Haltevorrichtung
- 2: Glied
- 3: Glied
- 4: Glied
- 5: Glied
- 6: Gelenk
- 7: Gelenk
- 8: Gelenk
- 9: Gelenk
- 10: Verlängerung
- 11: Abnahmepunkt
- 12: Bewegungsband
- 13: Melkbereich
- 14: Melkbereich
- 15: Gangbereich
- 16: Gerüst
- 17: Gerüst
- 18: Tragstruktur
- 19: Führungsschiene
- 20: Führungsschiene
- 21: Schlitten
- 22: Achse

## Patentansprüche

1. Haltevorrichtung (1) für wenigstens ein Melkzeug, **dadurch gekennzeichnet, dass** diese wenigstens ein mehrgliedriges Gelenkgetriebe aufweist.

2. Haltevorrichtung nach Anspruch 1, **dadurch gekennzeichnet, dass** wenigstens ein viergliedriges Gelenkgetriebe vorgesehen ist.

3. Haltevorrichtung nach Anspruch 1 oder 2, **dadurch gekennzeichnet, dass** Gelenkgetriebe umlauffähig ist.

4. Haltevorrichtung nach Anspruch 1, 2 oder 3, **dadurch gekennzeichnet, dass** ein Glied (5) des Gelenkgetriebes längenveränderlich ist.

5. Haltevorrichtung nach Anspruch 4, **dadurch gekennzeichnet, dass** das Glied (5) teleskopartig ausgebildet ist.

6. Haltevorrichtung nach Anspruch 4, **dadurch gekennzeichnet, dass** das Glied (5) eine Kolben-Zylinder-Einheit aufweist, wobei der Kolben der Kolben-Zylinder-Einheit mit einer Stange verbunden ist.

7. Haltevorrichtung nach einem oder mehreren vorhergehenden Ansprüchen 1 bis 6, **dadurch gekennzeichnet, dass** wenigstens ein Gelenkgetriebe zumindest verschwenkbar, vorzugsweise verdrehbar mit einer Struktur (18) verbunden ist.

8. Haltevorrichtung nach einem oder mehreren vorhergehenden Ansprüchen 1 bis 7, **gekennzeichnet durch** eine Führungseinrichtung, zur Führung wenigstens eines Gelenkgetriebes.

9. Haltevorrichtung nach Anspruch 8, **dadurch gekennzeichnet, dass** die Führungseinrichtung wenigstens eine Führungsschiene (19, 20) aufweist.

10. Melkvorrichtung mit
zwei Melkbereichen (13, 14),
einem Gangbereich (15) zwischen den Melkbereichen (13, 14) und mit
wenigstens einer im Gangbereich (15) angeordneten Haltevorrichtung (1) für wenigstens ein Melkzeug,
**dadurch gekennzeichnet, dass** die Haltevorrichtung wenigstens ein mehrgliedriges Gelenkgetriebe aufweist.

11. Melkvorrichtung nach Anspruch 10, **dadurch gekennzeichnet, dass** die Haltevorrichtung (1) wenigstens ein viergliedriges Gelenkgetriebe aufweist.

12. Melkvorrichtung nach Anspruch 10 oder 11, **dadurch gekennzeichnet, dass** das wenigstens eine Gelenkgetriebe der Haltevorrichtung (1) umlauffähig ist.

13. Melkvorrichtung nach Anspruch 10, 11 oder 12, **dadurch gekennzeichnet, dass** wenigstens eine Gelenkgetriebe mindestens ein Glied (5) aufweist, welches längenveränderlich ist.

14. Melkvorrichtung nach Anspruch 13, **dadurch gekennzeichnet, dass** das Glied (5) teleskopartig ausgebildet ist.

15. Melkvorrichtung nach Anspruch 14, **dadurch gekennzeichnet, dass** das Glied (5) eine Kolben-Zylinder-Einheit aufweist, wobei der Kolben der Kolben-Zylinder-Einheit mit einer Stange verbunden ist.

16. Melkvorrichtung nach einem oder mehreren vorhergehenden Ansprüchen 10 bis 15, **gekennzeichnet durch** wenigstens eine oberhalb des Ganges (15) angeordnete Struktur (18) mit der die wenigstens eine Haltevorrichtung (1), insbesondere wenigstens ein Gelenkgetriebe, zumindest verschwenkbar, vorzugsweise verdrehbar verbunden ist.

17. Melkvorrichtung nach einem oder mehreren vorhergehenden Ansprüchen 10 bis 16, **dadurch gekennzeichnet, dass** oberhalb des Ganges (15) wenigstens eine Führungseinrichtung (19, 20, 21) vorgesehen ist, die mit einer Haltevorrichtung (1) verbunden ist..

18. Melkvorrichtung nach Anspruch 17, **dadurch gekennzeichnet, dass** die Führungseinrichtung wenigstens eine Führungsschiene (19, 20) aufweist.
